Europäisches Patentamt

European Patent Office

Office européen des brevets

(11) Veröffentlichungsnummer : **0 363 366 B1**

(12) **EUROPÄISCHE PATENTSCHRIFT**

(19)

(45) Veröffentlichungstag der Patentschrift :
**11.03.92 Patentblatt 92/11**

(21) Anmeldenummer : **88902410.5**

(22) Anmeldetag : **18.03.88**

(86) Internationale Anmeldenummer :
**PCT/DE88/00171**

(87) Internationale Veröffentlichungsnummer :
**WO 88/07143 22.09.88 Gazette 88/21**

(51) Int. Cl.⁵ : **F16B 37/04**

(54) **MIT ZÄHNEN VERSEHENE EINPRESSMUTTER.**

(30) Priorität : **18.03.87 DE 3708856**

(43) Veröffentlichungstag der Anmeldung :
**18.04.90 Patentblatt 90/16**

(45) Bekanntmachung des Hinweises auf die
Patenterteilung :
**11.03.92 Patentblatt 92/11**

(84) Benannte Vertragsstaaten :
**AT CH FR GB LI NL SE**

(56) Entgegenhaltungen :
**EP-A- 0 182 472**
**CH-A- 441 873**
**DE-B- 1 958 353**
**DE-U- 6 608 803**

(73) Patentinhaber : **LEITNER, Kajetan**
**23293 Cortijos Nuevos**
**E-Jaén (ES)**

(72) Erfinder : **LEITNER, Kajetan**
**23293 Cortijos Nuevos**
**E-Jaén (ES)**

(74) Vertreter : **Bardehle, Heinz, Dipl.-Ing. et al**
**Patent- und Rechtsanwälte**
**Bardehle-Pagenberg-Dost-Altenburg-Frohwitter-Geissler**
**& Partner Postfach 86 06 20**
**W-8000 München 86 (DE)**

**Beschreibung**

Die Erfindung bezieht sich auf eine mit Zähnen versehene Einpressmutter gemäß dem Oberbegriff des Patentanspruchs 1.

Eine derartige Einpressmutter, die nach Einpressen verdreht werden muß, ist aus der DE-B-19 58 353 und aus der CH-A-441 873 bekannt. Von derartigen Einpressmuttern wird verlangt, daß sie in axialer Richtung entgegengesetzt dem Einpressvorgang verlaufenden Abzugskräften widerstehen können. Diese Widerstandsfähigkeit ist umso größer, je tiefer die Zähne der Einpressmutter in das die Aufnahmebohrung enthaltende Bauteil eindringen. Tief eindringende Zähne führen jedoch zu dem Problem, daß eine solche Einpressmutter sich nur mit großen Kräften überhaupt einpressen läßt. Dabei besteht die Gefahr einer unerwünschten Verformung des Bauteils. Insofern handelt es sich also bei der Dimensionierung einer Einpressmutter um einen Kompromiß zwischen den gewünschten relativ hohen Abzugskräften und den für das Einpressen erforderlichen Kräften.

Der Erfindung liegt die Aufgabe zugrunde, eine derartige Einpressmutter so zu gestalten, daß ohne besondere Erhöhung der für das Einpressen erforderlichen Kräfte die auf die Einpressmutter gegebenenfalls wirksamen Abzugskräfte besonders hoch sein können, ohne daß es eines Verdrehens der eingepreßten Mutter bedarf. Erfindungsgemäß geschieht dies durch die im kennzeichnenden Teil des Patentanspruchs 1 angegebenen Merkmale.

Aufgrund dieser Gestaltung der Zähne ergeben sich auf deren einer Seite relativ breite Flanken, die auf die Basis der Mutter zuweisen, also bei Wirkung von Abzugskräften gegen das Material des betreffenden Werkstücks in axialer Richtung drücken. Auf diese Weise gibt man den Zähnen eine große flächige Auflage gegenüber dem Material des Werkstücks, wodurch die zum Ausreißen der eingepreßten Mutter notwendigen Abzugskräfte gegenüber bekannten Einpressmuttern erheblich erhöht werden. Aufgrund des sich zur Mutterachse hin öffnenden Winkels von etwa 112° zwischen dem längeren Schenkel in der Ebene der Stirnfläche und einem Radialstrahl ergeben sich relativ stumpfe Zähne, die der Belastung beim Einpressen ohne weiteres widerstehen können, also nicht zum Abbrechen neigen. Der genannte Winkel von 112° kann selbstverständlich in beiden Richtungen um einige Grad verändert werden, ohne daß sich an dem erzielten Effekt der Widerstandsfähigkeit der Zähne etwas ändert.

Die Fläche der Zahnflanken bestimmt den Widerstand der Mutter gegen Verdrehungsbelastung, wie sie beim Eindrehen von Schrauben mit z.B. beschädigtem Gewinde auftreten kann. Dabei ist wichtig, daß die größere Fläche der Flanken auf die beim Einpressen entstandene belastete Furche im Werkstück trifft, was bei der erfindungsgemäßen Mutter der Fall ist. Da der Kragen der Mutter konisch ausgebildet ist, verlieren die Flächen der Zahnflanken bei Wirkung von axialen Abzugskräften mehr und mehr den Kontakt mit ihren Auflageflächen im Werkstück, während die belasteten Kanten der Zähne entsprechend den längeren Schenkeln sich umso mehr in das Bauteilmaterial eingraben, je mehr die Flächen der Zahnflanken ihre Führung in der Furche verlieren. Dieser erwünschte Effekt ist auf zwei Eigenschaften der Mutter zurückzuführen, nämlich die Konizität des Kragens und die Steigung der Zähne. Da eine längere Kante einem Austrieb der Mutter mehr Widerstand entgegensetzen kann als eine kürzere, ist es erwünscht, daß auch die längere Kante die belastete ist, wie dies bei der erfindungsgemäßen Mutter der Fall ist. In der Praxis tritt, insbesondere bei automatischen Einschraubgeräten, immer eine auf die Mutter einwirkende Mischbelastung auf, wenn eine Schraube in die Mutter eingedreht wird, d.h. eine Axial- und eine Drehbelastung. Aus den dargelegten Gründen kann die Mutter gerade dieser Belastungsart hohen Widerstand gegen Hinausdrücken entgegensetzen.

Ein mit Rücksicht auf die Einpressbarkeit der Mutter und die Erzielung hoher Abzugskräfte günstiger Steigungswinkel der Zähne liegt bei 45°. Je größer dieser Winkel wird, desto höher werden auch die Abzugskräfte, da in diesem Falle die Lage der Zähne in Bezug auf die axial wirkenden Abzugskräfte besonders günstig ist.

Für das Einpressen der Einpressmutter benötigt man einen Freiraum für das dabei von den Zähnen verdrängte Material. Unter Berücksichtigung dieses Freiraumes ergibt sich eine technisch günstige Gestaltung der Einpressmutter dann, wenn die radiale Höhe der Zähne und der Durchmesser der Aufnahmebohrung so gewählt sind, daß die Zähne 50 - 75% ihrer maximalen Höhe in das die Aufnahmebohrung enthaltende Werkstück eindringen.

Für eine günstige Gestaltung der Einpressmutter ist es weiterhin erforderlich, die Zahnbreite in Bezug auf den Umfang des Kragens so zu wählen, daß sich im wesentlichen unabhängig vom Kragendurchmesser eine Anzahl von Zähnen ergibt, die einerseits genügend Abzugskräfte aufnehmen können und andererseits aufgrund ihrer Substanz nicht dazu neigen, beim Einpressen zu brechen. Eine günstige Gestaltung erhält man dann, wenn die Zahnbreite einem radial gemessenen Winkel von etwa 10° entspricht.

Für Einpreßmuttern mit unterschiedlichen Zahnkranzaußendurchmessern besteht als Alternative die Möglichkeit, das Verhältnis Zahnteilung/Zahnkranzaußendurchmesser, jeweils in der Stirnfläche gemessen, derart verlaufen zu lassen, daß dieses Verhältnis etwa von 11 % bei kleinen Zahnkranzaußendurchmessern (etwa 6mm) bis zu etwa 7,5 % bei großen Zahnkranzaußendurchmessern (etwa 24 mm) verläuft. Aufgrund dieser Änderung des Verhältnisses Zahnteilung/ Zahnkranzaußendurchmesser ergibt sich eine unterproportionale Zunahme der Zähnezahl, d.h. die Zähne werden bei zunehmendem Zahnkranzaußendurchmesser nicht zu groß, was der Herstellbarkeit großer Einpreßmuttern zugute kommt. Der Verlauf des Verhältnisses kann dabei etwa linear sein.

Mit Rücksicht auf die Fabrikation der Einpressmutter und deren gewünschte Verankerung in einem Werkstück erhält man eine zweckmäßige Gestaltung der Nut dann, wenn deren Breite 1/3 bis 1/2 der Gesamthöhe von Kragen und Nut ausmacht.

Eine eingepreßte Einpressmutter wird nicht nur durch rein axial wirkende Abzugskräfte z.B. beim Einschrauben eines Bolzens belastet, es ergeben sich auf sie auch dabei wirkende Verdrehungskräfte, insbesondere dann, wenn ein einzuschraubender Bolzen gegenüber der Einpressmutter eine hohe Reibung aufweist. Um diesen Kräften entgegenzuwirken, gestaltet man die Einpressmutter zweckmäßig so, daß die Zähne in einem Steigungssinn verlaufen, der demjenigen des Muttergewindes entgegengesetzt gerichtet ist.

Ein Ausführungsbeispiel der Erfindung ist in den Figuren dargestellt. Es zeigen:

Fig. 1 eine in einer Aufnahmebohrung sitzende Einpressmutter im Axialschnitt,

Fig. 2 einen Ausschnitt aus der Einpressmutter gemäß Fig. 1 gemäß der Schnittlinie I-I im Radialschnitt,

Fig. 3 den in Fig. 2 dargestellten Ausschnitt in axialer Blickrichtung auf die der Nut benachbarte Stirnseite des Kragens gemäß der Schnittlinie II-II.

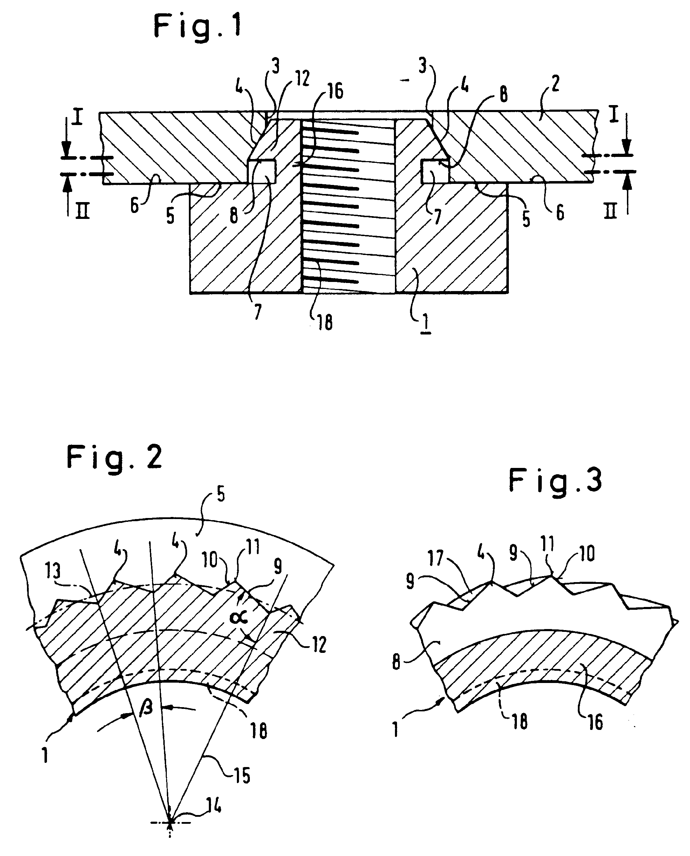

Figur 1 zeigt eine Einpressmutter 1, eingepreßt in ein Werkstück 2. Die Einpressmutter 1 sitzt in der Bohrung 3 des Werkstücks 2. Ihre aus dem Kragen 12 herausragenden Zähne 4 dringen in die Wandung der Bohrung 3 ein. Dabei sitzt die Basis 5 der Einpressmutter 1 auf der Fläche 6 des Werkstückes 2. Infolge Anbringung der Nut 7 an der Einpressmutter 2 besitzen die Zähne 4 eine der Mutterbasis 5 zugekehrte Stirnfläche 8.

Figur 2 zeigt in vergrößertem Maßstab einen Ausschnitt aus der Einpressmutter gemäß Figur 1 ohne das Werkstück 2, und zwar gemäß der Schnittlinie I-I, die unmittelbar oberhalb der Stirnfläche 8 verläuft. Wie ersichtlich, weisen die Zähne 4 die erheblich ungleich langen Schenkel 9 und 10 auf, wobei sich der Eindringbereich der Zähne 4 von ihren Zahnspitzen 11 bis zu der strich-punktiert gezeichneten Linie 13 erstreckt, die der Wand der Aufnahmebohrung 3 (s. Fig. 1) entspricht. Dabei beträgt der der Mutterachse 14 zugewandte Winkel $\alpha$ zwischen dem längeren Schenkel 9 und einem Radialstrahl 112°. In Figur 2 ist weiterhin der Winkel $\beta$ eingetragen, der hier 10° beträgt und der die Breite der Zähne 4 definiert.

In Figur 3 ist der in der Figur 2 dargestellte Ausschnitt der Einpressmutter in umgekehrter Blickrichtung wiedergegeben, und zwar teilweise als Schnitt durch den Hals 16 (s. Fig. 1) entlang der Schnittlinie II-II ohne das Werkstück 2. Dabei erscheinen die gegenüber der Nut in der Stirnfläche 8 vorspringenden Zähne 4 voll sichtbar, wobei hinter den längeren Schenkeln 9 der weitere schräge Verlauf der zugehörigen Flanken 17 sichtbar ist. Diese Flanken verlaufen hier unter einem Steigungswinkel von 45°. Aus Figur 3 wird deutlich, daß sich die Einpressmutter 1 mit diesen Flanken 17 in günstiger Weise gegen das Material des Bauteiles 2 bei axialer Belastung in Richtung von dem Bauteil 2 weg abstützen kann.

Bei einer Mutter, die in eine Bohrung von 10 mm Durchmesser eingepreßt wird, kann vorzugsweise der längere Schenkel 9 0,7 mm lang und der kürzere Schenkel 10 0,4 mm lang sein.

Einpreßmuttern gemäß den Figuren 1 bis 3 werden in einem Bereich von etwa 6 mm bis etwa 24 mm Zahnkranzaußendurchmesser, in der Stirnfläche 8 gemessen, verwendet. Für den mittleren Bereich dieser Größen von Einpreßmuttern liegt der oben erwähnte, die Zahnbreite repräsentierende Winkel $\beta$ bei etwa 10°. Wenn man nun für den vorstehend genannten Größenbereich der Einpreßmutter die Zahnteilung, gemessen' in der Stirnfläche 8, mit gleicher Länge belassen würde, dann ergäben sich bei großen Einpreßmuttern relativ kleine Zähne. Mit Rücksicht auf die bei der Herstellung der einen Massenartikel darstellenden Einpreßmutter unvermeidbaren Toleranzen kann dann insbesondere bei in ihrem Toleranzbereich groß ausfallender Aufnahmebohrung der Fall eintreten, daß sich keine ausreichende Eindringtiefe der Zähne in das Bauteil mehr ergibt. Unmgekehrt würde eine bei allen Größen der Einpreßmutter gleiche Zähnezahl mit zunehmendem Zahnkranzaußendurchmesser zu so großen Teilungen führen, daß die Herstellung der Zähne schwierig werden würde. Abgesehen davon lassen sich Einpreßmuttern mit besonders großen Zähnen nur schwer einpressen, so daß die volle Zahntiefe für das Halten der Zähne im Bauteil nicht ausgenutzt werden könnte. Um diesen einander entgegenlaufenden Tendenzen gerecht zu werden, wird der Winkel $\beta$ für relativ kleine Einpreßmuttern größer gewählt als für relativ große Einpreßmuttern. Als besonders günstig hat sich dabei ergeben, das Verhältnis Zahnteilung/Zahnkranzaußendurchmesser, jeweils in der Stirnfläche 8 gemessen, derart zu verändern, daß dieses Verhältnis von etwa 11 %; bei kleinen Zahnkranzaußendurchmessern (etwa 6 mm) bis zu etwa 7,5%; bei großen Zahnkranzaußendurchmessern (etwa 24 mm) verläuft, wobei dieser Verlauf etwa linear gestaltet werden kann.

**Patentansprüche**

1. Mit Zähnen versehene Einpressmutter, die einen konischen Kragen aufweist, der durch eine Nut von einer Basis scharfkantig abgesetzt ist und gegenüber der Basis eine Stirnfläche bildet, für eine Aufnahmebohrung eines Werkstücks, deren Durchmesser größer ist als der größte Durchmesser der Täler der über den Umfang des Kragens mit gleichbleibender Teilung verteilten, in das Werkstück eindringenden Zähne, die mit einem Steigungswinkel von etwa 30° bis etwa 45° gegenüber der Mutterachse verlaufen, so daß die eine Flanke der Zähne auf die Basis der Mutter zuweist, dadurch gekennzeichnet, daß die Zähne (4) im Eindringbereich der Querschnittsebene der Stirnfläche (8) derart erheblich ungleich lange Schenkel (9, 10) aufweisen, daß der sich zur Mutterachse hin öffnende Winkel ($\alpha$) der längeren Schenkel (9) in der Ebene der Stirnfläche (8) gegenüber einem Radialstrahl (15) etwa 112° beträgt, wobei die den längeren Schenkeln (9) zugeordneten Flanken (17) der Zähne (4) auf die Basis (5) der Mutter (1) zuweisen.

2. Einpressmutter nach Anspruch 1, dadurch gekennzeichnet, daß der Steigungswinkel der Zähne (4) 45° beträgt.

3 . Einpressmutter nach Anspruch 1 oder 2, dadurch gekennzeichnet, daß die Zahnbreite einem radial gemessenen Winkel ($\beta$) von etwa 10° entspricht.

4. Einpressmutter nach einem der Ansprüche 1 bis 3, dadurch gekennzeichnet, daß das Verhältnis Zahnteilung/Zahnkranzaußendurchmesser, jeweils in der Stirnfläche (8) gemessen, derart verläuft, daß dieses Verhältnis von etwa 11 % bei kleinen Zahnkranzaußendurchmessern bis zu etwa 7,5 % bei großen Zahnkranzaußendurchmessern verläuft.

5. Einpressmutter nach einem der Ansprüche 1 bis 4, dadurch gekennzeichnet, daß die Breite der Nut (7) 1/3 bis 1/2 der Gesamthöhe von Kragen (12) und Nut (7) ausmacht.

6. Einpressmutter nach einem der Ansprüche 1 bis 5, dadurch gekennzeichnet, daß die Zähne (4) in einem Steigungssinn verlaufen, der demjenigen des Muttergewindes (18) entgegengesetzt gerichtet ist.

**Claims**

1. A press-in nut, provided with teeth, which nut has a tapered collar which is recessed, in a sharp-edged manner, from a base by a groove, and which forms an end face with respect to the base, for a receiving bore of a workpiece, the diameter of which is greater than the greatest diameter of the troughs of the teeth, distributed over the circumference of the collar with a uniform pitch and penetrating into the workpiece, which teeth run with an angle of inclination from approximately 30°to approximately 45 ° with respect to the nut axis, so that one flank of the teeth points to the base of the nut, characterised in that the teeth (4) in the region of penetration of the cross-sectional plane of the end face (8) have shanks (9,10) of considerably unequal length, such that the angle ($\alpha$) of the longer shanks (9), opening towards the axis of the nut; in the plane of the end face (8) is approximately 112° with respect to a radial line (15), in which the flanks (17) of the teeth (4), associated with the longer shanks (9), point to the base (5) of the nut (1).

2. A press-in nut according to Claim 1, characterised in that the angle of inclination of the teeth (4) is 45° .

3. A press-in nut according to Claim 1 or 2, characterised in that the tooth width corresponds to a radially measured angle ($\beta$) of approximately 10°.

4. A press-in nut according to one of Claims 1 to 3, characterised in that the relationship of tooth pitch/toothed rim outer diameter, in each case measured in the end face (8), runs such that this relationship runs from approximately 11% in the case of small toothed rim outer diameters, up to approximately 7.5% in the case of large toothed rim outer diameters.

5. A press-in nut according to one of Claims 1 to 4, characterised in that the width of the groove (7) is 1/3 to 1/2 the overall height of the collar (12) and groove (7).

6. A press-in nut according to one of Claims 1 to 5, characterised in that the teeth (4,) run in a direction of inclination which is in the opposite direction to that of the nut thread (18).

**Revendications**

1. Ecrou encastré, denté et présentant un collet conique qui, par la présence d'une gorge, est en décrochement par rapport à une base et forme, en vis-à-vis de la base, une face frontale destinée à un perçage récepteur d'une pièce et de diamètre supérieur au diamètre maximal des creux des dents qui sont réparties avec un pas constant sur la périphérie du collet, qui pénètrent dans la pièce et qui s'étendent avec un angle d'inclinaison d'environ 30° à environ 45° par rapport à l'axe de l'écrou, de sorte que l'un des flancs des dents est tourné vers la base de l'écrou, <u>caractérisé</u> en ce que les dents (4) présentent, dans la région de pénétration du plan de section de la face frontale (8), des côtés (9,10) de longueurs tellement différentes que l'angle (α), ouvert vers l'axe de l'écrou, du plus long côté (9) est égal à environ 112° par rapport à un rayon radial (15) dans le plan de la face frontale (8), les flancs (17) des dents (4) qui sont associés aux plus longs côtés (9) étant tournés vers la base (5) de l'écrou (1).

2. Ecrou encastré selon la revendication 1, caractérisé en ce que l'angle d'inclinaison des dents (4) est égal à 45°.

3. Ecrou encastré selon la revendication 1 ou 2, caractérisé en ce que la largeur des dents correspond à un angle (β), mesuré radialement, d'environ 10°.

4. Ecrou encastré selon l'une des revendications 1 à 3, caractérisé en ce que le rapport du pas des dents au diamètre extérieur de la couronne dentée, respectivement mesurés dans la face frontale (8), évolue de telle sorte qu'il , s'étend d'environ 11% pour de petits diamètres extérieurs de couronne dentée à environ 7,5% pour de grands diamètres extérieurs de couronne dentée.

5. Ecrou encastré selon l'une des revendications 1 à 4, caractérisé en ce que la largeur de la gorge (7) occupe 1/3 à 1/2 de la hauteur totale du collet (12) et de la gorge (7).

6. Ecrou encastré selon l'une des revendications 1 à 5, caractérisé en ce que les dents (4) s'étendent dans une direction d'inclinaison opposée à celle du filetage (18) de l'écrou.

EP 0 363 366 B1

# Fig.1

# Fig. 2

# Fig.3

6